(19) **Europäisches Patentamt / European Patent Office / Office européen des brevets**

(11) **EP 2 271 946 B1**

(12) **FASCICULE DE BREVET EUROPEEN**

(45) Date de publication et mention
de la délivrance du brevet:
**13.03.2019 Bulletin 2019/11**

(21) Numéro de dépôt: **08786723.0**

(22) Date de dépôt: **31.07.2008**

(51) Int Cl.:
***G01P 15/18*** (2013.01)

(86) Numéro de dépôt international:
**PCT/EP2008/060102**

(87) Numéro de publication internationale:
**WO 2009/132712 (05.11.2009 Gazette 2009/45)**

(54) **DISPOSITIF DE DETECTION D'EVENEMENT DE PERCUSSION, ET SYSTEME MOBILE ASSOCIE**

EINRICHTUNG ZUM DETEKTIEREN EINES StOß-EREIGNISSES UND ZUGEHÖRIGES MOBILSYSTEM

DEVICE FOR DETECTING A PERCUSSION EVENT, AND ASSOCIATED MOBILE SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.04.2008 US 49100**

(43) Date de publication de la demande:
**12.01.2011 Bulletin 2011/02**

(73) Titulaire: **Movea S.A.**
**38000 Grenoble Cedex (FR)**

(72) Inventeur: **CARITU, Yanis**
**F-38134 Saint Joseph La Riviere (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A- 0 802 415     EP-A- 1 715 349**
**US-A1- 2006 213 267     US-B1- 6 369 794**

**Description**

L'invention porte sur un dispositif de détection d'événement de percussion comprenant au moins un accéléromètre axial, et sur un système mobile associé.

Il existe des dispositifs de détection de chocs. Le document US 6 369 794 B1 (Matsushita Electric Industrial Co) divulgue un système permettant de gérer des chocs intentionnels effectués par un utilisateur sur un téléphone mobile, ou encore le document US2006/0213267.

Le dispositif comprend au moins un accéléromètre dont les mesures sont traitées par comparaison à des seuils pour détecter un choc.

De tels systèmes ont un taux d'erreur de détection non négligeable, et des moyens de calculs importants.

Un but de l'invention est de proposer une alternative aux dispositifs précités, à coût et complexité réduits, et à taux d'erreur de détection d'événement de percussion réduit.

Un autre but de l'invention est de pouvoir écarter une accélération angulaire forte d'un véritable événement de percussion.

Il est proposé, selon un aspect de l'invention, un dispositif de détection d'événement de percussion selon la revendication 1.

Ainsi, le filtrage précité ne laisse passer que les fréquences élevées, qui sont celles d'événements brefs, donc utiles pour l'algorithme de détection. Par ailleurs, ce prétraitement n'est appliqué qu'à une fenêtre de taille en rapport avec l'événement attendu. On améliore ainsi la qualité de détection de tels événements.

Dans un mode de réalisation, le dispositif comprend deux ou trois accéléromètres montés deux à deux orthogonaux.

Il est alors quasiment impossible de ne pas détecter un événement de percussion, car on détecte selon deux ou trois axes de l'espace.

Le dispositif comprend, en outre, au moins un capteur axial additionnel insensible aux vibrations, pour mesurer l'orientation du dispositif par rapport à un champ vectoriel de direction connue dans un repère fixe non lié au dispositif.

De tels capteurs additionnels peuvent être, par exemple, des magnétomètres, des gyromètres ou des cellules photoélectriques.

Le dispositif est alors capable de ne pas confondre une accélération rapide, en rotation, avec un événement de percussion.

Selon un mode de réalisation, le dispositif comprend deux capteurs axiaux additionnels montés orthogonalement.

Le dispositif peut, quelque soit l'axe d'une accélération rapide, différencier une telle accélération rapide et un événement de percussion. Il s'agit d'une configuration suffisante pour détecter tout événement de percussion.

Dans un mode de réalisation, lesdits moyens de filtrage coupe-bas comprennent :

- des premiers moyens de calcul d'une norme euclidienne d'un vecteur ayant pour composantes la ou les mesures simultanées transmises par le ou les accéléromètres axiaux ;
- éventuellement, en cas de présence d'au moins un capteur axial additionnel, des premiers moyens bis de calcul d'une norme euclidienne d'un vecteur bis ayant pour composantes la ou les mesures simultanées transmises par le ou les capteurs axiaux additionnels ;
- des deuxièmes moyens de calcul sur une fenêtre glissante d'une moyenne temporelle, sur la durée de la fenêtre courante, de la norme euclidienne dudit vecteur ; et
- éventuellement, en cas de présence d'au moins un capteur axial additionnel, des deuxièmes moyens bis de calcul sur une fenêtre glissante d'une moyenne temporelle, sur la durée de la fenêtre courante, de la norme euclidienne dudit vecteur bis.

En outre, lesdits moyens de filtrage coupe-bas comprennent un soustracteur adapté pour :

- soustraire la moyenne temporelle, sur la durée de la fenêtre courante, de la norme euclidienne dudit vecteur, fournie par lesdits deuxièmes moyens de calcul, à la norme euclidienne dudit vecteur, fournie par lesdits premiers moyens de calcul ; et
- éventuellement, en cas de présence d'au moins un capteur axial additionnel, soustraire la moyenne temporelle, sur la durée de la fenêtre courante, de la norme euclidienne dudit vecteur bis, fournie par lesdits deuxièmes moyens bis de calcul, à la norme euclidienne dudit vecteur bis, fournie par lesdits premiers moyens bis de calcul.

Un centrage d'une norme d'un vecteur des mesures du ou des accéléromètres est ainsi faite, ainsi qu'un centrage d'une norme d'un vecteur des mesures du ou des capteurs additionnels, en cas de présence de ces derniers.

Dans un autre mode de réalisation, lesdits moyens de filtrage coupe-bas comprennent :

- des premiers moyens de calcul d'un vecteur ayant pour composantes respectives une norme euclidienne de la ou des mesures simultanées transmises par le ou les accéléromètres axiaux ;
- éventuellement, en cas de présence d'au moins un capteur axial additionnel, des premiers moyens bis de calcul d'un vecteur bis ayant pour composantes respectives une norme euclidienne de la ou des mesures simultanées transmises par le ou les capteurs axiaux additionnels ;
- des deuxièmes moyens de calcul sur une fenêtre glissante d'une moyenne temporelle, sur la durée de la fenêtre courante, dudit vecteur ; et

- éventuellement, en cas de présence d'au moins un capteur axial additionnel, des deuxièmes moyens bis de calcul sur une fenêtre glissante d'une moyenne temporelle, sur la durée de la fenêtre courante, dudit vecteur bis.

En outre, lesdits moyens de filtrage coupe-bas comprennent, un soustracteur adapté pour :

- soustraire la moyenne temporelle, sur la durée de la fenêtre courante, dudit vecteur, fournie par lesdits deuxièmes moyens de calcul, au vecteur fourni par lesdits premiers moyens de calcul ; et
- éventuellement, en cas de présence d'au moins un capteur axial additionnel, soustraire la moyenne temporelle, sur la durée de la fenêtre courante, dudit vecteur bis, fournie par lesdits deuxièmes moyens bis de calcul, au vecteur bis fourni par lesdits premiers moyens bis de calcul.

Un centrage des composantes normées d'un vecteur des mesures du ou des accéléromètres est ainsi faite, ainsi qu'un centrage des composantes normées d'un vecteur des mesures du ou des capteurs additionnels, en cas de présence de ces derniers.

Selon un mode de réalisation, lesdits moyens de comparaison sont adaptés pour :

- comparer la différence scalaire ou les composantes de la différence vectorielle, correspondant à le ou les accéléromètres, délivrée en sortie desdits moyens de filtrage coupe-bas, avec deux seuils de signes opposés, positif et négatif ; et
- éventuellement, en cas de présence d'au moins un capteur axial additionnel, comparer les différences scalaires ou les composantes des différences vectorielles, correspondant à le ou les capteurs axiaux additionnels, délivrées en sortie desdits moyens de filtrage coupe-bas, avec deux seuils de signes opposés, positif et négatif.

En outre, lesdits moyens d'analyse sont adaptés pour délivrer une information représentative de la détection d'un événement de percussion lorsque lesdits moyens de comparaison détectent un dépassement positif du seuil positif et un dépassement négatif du seuil négatif, successivement dans un ordre quelconque, sur la différence scalaire ou sur au moins une composante de la différence vectorielle correspondant à le ou les accéléromètres, délivrée en sortie desdits moyens de filtrage coupe-bas, et, en cas de présence d'au moins un capteur axial additionnel, lorsque, en outre, simultanément, lesdits moyens de comparaison ne détectent aucun dépassement positif du seuil positif ou dépassement négatif du seuil négatif d'une composante de la différence vectorielle correspondant à le ou les capteurs axiaux additionnels, délivrée en sortie desdits moyens de filtrage coupe-bas.

Il est entendu, par dépassement négatif d'un seuil négatif, l'atteinte d'une valeur inférieure au seuil négatif.

Le dispositif permet de fournir une information représentative de la détection d'un événement de percussion, à partir d'un centrage précédemment cité, d'une précision améliorée.

Selon un autre mode de réalisation lesdits moyens d'analyse comprennent :

- des troisièmes moyens de calcul du carré de la différence scalaire ou des carrés des composantes de la différence vectorielle, correspondant à le ou les accéléromètres, délivrée en sortie desdits moyens de filtrage coupe-bas ; et
- éventuellement, en cas de présence d'au moins un capteur axial additionnel, des troisièmes moyens bis de calcul du carré de la différence scalaire ou des carrés des composantes de la différence vectorielle, correspondant à le ou les capteurs axiaux additionnels, délivrée en sortie desdits moyens de filtrage coupe-bas.

En outre, lesdits moyens d'analyse sont adaptés pour délivrer une information représentative de la détection d'un événement de percussion, lorsque lesdits moyens de comparaison détectent un dépassement positif d'un seuil positif, sur le carré de la différence scalaire ou sur le carré d'au moins une composante de la différence vectorielle correspondant à le ou les accéléromètres, délivrée en sortie desdits moyens de filtrage coupe-bas, et, en cas de présence d'au moins un capteur axial additionnel, lorsque, en outre, simultanément, lesdits moyens de comparaison ne détectent aucun dépassement positif du seuil positif du carré de la différence scalaire ou du carré d'une composante de la différence vectorielle correspondant à le ou les capteurs axiaux additionnels, délivrée en sortie desdits moyens de filtrage coupe-bas.

Le dispositif permet de fournir une information représentative de la détection d'un événement de percussion, à partir d'un centrage précédemment cité, avec des moyens de calculs limités.

La taille de la fenêtre glissante peut-être comprise entre environ une milliseconde et trois-cents millisecondes.

Une telle taille de fenêtre glissante est un excellent compromis entre précision, temps de calcul et latence de la réponse.

Par exemple, lesdits capteurs axiaux additionnels sont des magnétomètres.

Les magnétomètres ne mesurent que le champ magnétique terrestre et sont complètement insensibles aux forces mécaniques, impacts, vibrations ou chocs. Ils sont, dans ce rôle, plus robustes qu'un gyromètre par exemple, qui, bien que sensible à l'orientation peut avoir une légère sensibilité aux chocs et vibrations.

Par exemple, la norme euclidienne est la norme 1, la norme 2 ou la norme infinie. Bien entendu, toute autre norme euclidienne convient à la mise en oeuvre de l'invention.

Il est également proposé, selon un autre aspect de l'invention, un système mobile comprenant un dispositif de détection d'événement de percussion selon l'une des revendications précédentes, ledit système mobile comprenant une souris informatique, ou une télécommande, ou un périphérique de jeu vidéo, ou un téléphone mobile, ou un ordinateur portable, ou une chaussure, ou un boitier muni de moyens de fixation corporels.

Ainsi, tout système mobile peut intégrer un dispositif de détection d'événements de percussion. A ce titre également, les vêtements ou les sacs portés, sont également de bons candidats pour accueillir une telle fonction.

Dans un mode de réalisation, lesdits moyens d'analyse étant adaptés pour délivrer une information représentative de la détection d'un événement de percussion, le système comprend des moyens internes ou externes pour mettre en correspondance une réception d'une ou plusieurs informations représentatives de la détection d'un événement de percussion durant un intervalle de temps prédéterminé avec le déclenchement d'un événement, tel un clic, un double-clic ou un multi-clic informatique.

Ainsi, un événement de percussion peut aisément être associé à un clic, et un double événement de percussion associé à un double-clic. Bien entendu un élément de percussion peut être associé à tout événement souhaité.

De même, une telle détection d'événement de percussion peut être avantageuse dans un dispositif de type "métronome par le mouvement" dont l'idée est de piloter un rythme : détecter les chocs permet de compter par exemple le nombre de battements de pieds au sol par unité de temps, lorsqu'un tel dispositif est embarqué dans une paire de chaussures.

L'invention sera mieux comprise à l'étude de quelques modes de réalisation décrits à titre d'exemples nullement limitatifs et illustrés par les dessins annexés sur lesquels :

- la figure 1 illustre schématiquement un mode de réalisation d'un dispositif comprenant trois accéléromètres, selon un aspect de l'invention ;
- la figure 2 illustre schématiquement un autre mode de réalisation d'un dispositif comprenant trois accéléromètres et deux magnétomètres, selon un aspect de l'invention ;
- la figure 3 illustre schématiquement un mode de réalisation d'un filtre coupe-bas, selon un aspect de l'invention ;
- la figure 4 illustre schématiquement un autre mode de réalisation d'un filtre coupe-bas, selon un aspect de l'invention ;

- la figure 5 illustre schématiquement un mode de réalisation d'un module d'analyse, selon un aspect de l'invention ;
- la figure 6 illustre schématiquement un autre mode de réalisation d'un module d'analyse, selon un aspect de l'invention ;
- les figures 7a, 7b, 7c, 7d, 7e1, 7e2, 7f1, 7f2, et 7g illustrent schématiquement divers mode de réalisation d'un système selon un aspect de l'invention ;
- les figures 8a, 8b, 8c, 8d, et 8e illustrent les résultats obtenus dans un mode de réalisation d'un dispositif comprenant un seul accéléromètre ;
- les figures 9a, 9b, 9c, 9d, et 9e illustrent les résultats obtenus dans un mode de réalisation d'un dispositif comprenant trois accéléromètres montés deux à deux orthogonaux ; et
- les figures 10a, 10b, 10c, et 10e illustrent les résultats obtenus dans un mode de réalisation d'un dispositif comprenant au moins un accéléromètre et un magnétomètre, selon un aspect de l'invention

Dans l'ensemble de figures qui suivent, les éléments ayants les mêmes références sont similaires.

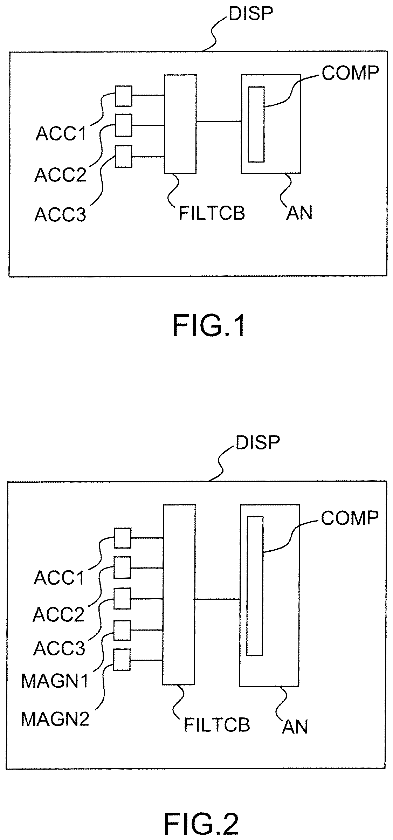

Tel qu'illustré sur la figure 1, un dispositif de détection d'événement de percussion ou choc DISP, comprend trois accéléromètres ACC1, ACC2 et ACC3, montés deux à deux orthogonaux. En variante, le dispositif de détection d'événement de percussion DISP comprend au moins un accéléromètre. Le dispositif DISP comprend également un filtre coupe-bas FILTCB, ou, en d'autres termes un filtre passe-haut, et un module d'analyse AN. Les mesures des accéléromètres ACC1, ACC2 et ACC3 sont transmises au filtre coupe-bas FILTCB dont les données de sortie sont transmises au module d'analyse AN qui comprend un module de comparaison COMP.

Par exemple, le filtre coupe-bas peut être un filtre de Butterworth

Sur la figure 2, le dispositif de détection d'événement de percussion DISP comprend, en outre, deux magnétomètres MAGN1 et MAGN2, montés orthogonalement. En variante, le dispositif DISP peut comprendre entre 1 et 3 accéléromètres et un seul magnétomètre. De manière plus générale, le ou les magnétomètres sont des capteurs axiaux additionnels de mesure de l'orientation du dispositif par rapport à un champ vectoriel de direction connue dans un repère fixe non lié au dispositif DISP insensibles aux vibrations, tels également des gyromètres ou cellules photoélectriques.

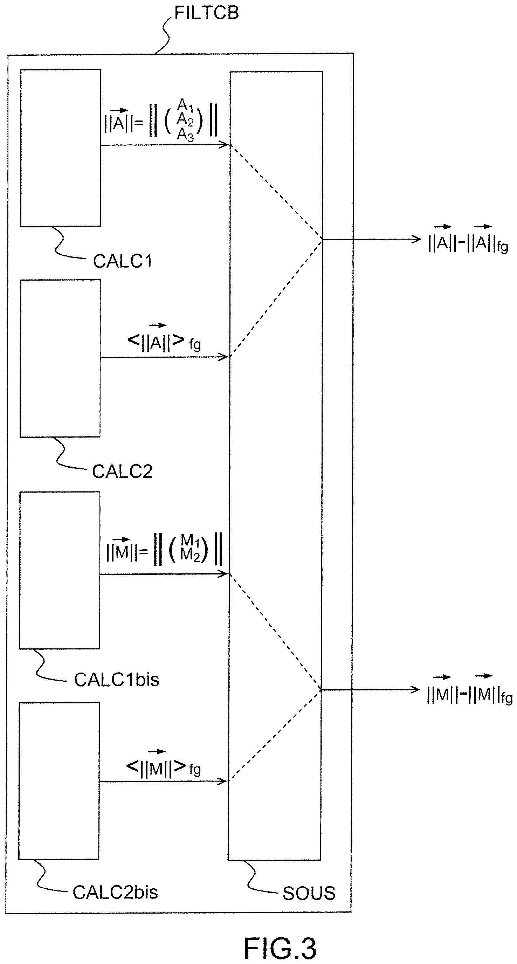

Le figure 3 représente un mode de réalisation du filtre coupe-bas FILTCB, comprenant un premier module de calcul CALC1 et un deuxième module de calcul CALC2. Un premier module de calcul bis CALC1bis et un deuxième module de calcul bis CALC2bis, optionnels, sont représentés.

Les premier et deuxième modules de calcul bis CALC1bis et CALC2bis sont présents dans des modes de réalisation dans lesquels le dispositif DISP comprend au moins un magnétomètre, par exemple, comme illustré sur la figure 2.

Le premier module de calcul CALC1 évalue une norme $\|\vec{A}\|$ euclidienne d'un vecteur $\vec{A}$ ayant pour composantes la ou les mesures simultanées

$$\vec{A} \,\square\, \begin{pmatrix} A1 \\ A2 \\ A3 \end{pmatrix},$$

ici au nombre de trois, transmises par les accéléromètres axiaux ACC1, ACC2 et ACC3.

En parallèle, le deuxième module de calcul CALC2, évalue, sur une fenêtre glissante fg, une moyenne temporelle $<\|\vec{A}\|>_{fg}$, sur la fenêtre courante, de la norme euclidienne $\|\vec{A}\|$ du vecteur $\vec{A}$.

Un soustracteur SOUS est capable d'effectuer la différence $\|\vec{A}\|-<\|\vec{A}\|>_{fg}$ entre la norme euclidienne $\|\vec{A}\|$ du vecteur $\vec{A}$, fournie par les premiers moyens de calcul CALC1 et la moyenne temporelle $<\|\vec{A}\|>_{fg}$, sur la fenêtre courante, de la norme $\|\vec{A}\|$ euclidienne du vecteur $\vec{A}$.

Dans le présent exemple, le dispositif DISP comprenant deux magnétomètres MAGN1 et MAGN2, le filtre coupe-bas FILTCB comprend également un premier module de calcul bis CALC1bis et un deuxième module de calcul bis CALC2bis, ce qui serait également le cas si le dispositif DISP ne comprenant qu'un seul magnétomètre. Le premier module de calcul bis CALC1bis évalue une norme $\|\vec{M}\|$ euclidienne d'un vecteur bis $\vec{M}$ ayant pour composantes la ou les mesures simultanées

$$\vec{M} = \begin{pmatrix} M1 \\ M2 \end{pmatrix}$$ transmises par les magnétomètres axiaux MAGN1 et MAGN2.

En parallèle, le deuxième module de calcul bis CALC2bis, évalue, sur un fenêtre glissante fg, une moyenne temporelle $<\|\vec{M}\|>_{fg}$, sur la fenêtre courante, de la norme euclidienne $\|\vec{M}\|$ du vecteur bis $\vec{M}$.

Le soustracteur SOUS est alors capable d'effectuer la différence $\|\vec{M}\|-<\|\vec{M}\|>_{fg}$ entre la norme euclidienne $\|\vec{M}\|$ du vecteur bis $\vec{M}$, fournie par les premiers moyens de calcul bis CALC1bis, et la moyenne temporelle $<\|\vec{M}\|>_{fg}$, sur la fenêtre courante, de la norme $\|\vec{M}\|$ euclidienne du vecteur bis $\vec{M}$.

Avantageusement, les calculs sur fenêtre glissante fg effectués par le deuxième module de calcul ou le deuxième module de calcul bis peuvent ajouter de nouvelles mesures entrantes, et retirer un nombre identique de mesures les plus anciennes de la fenêtre glissante fg, de manière à limiter le temps de calcul nécessaire.

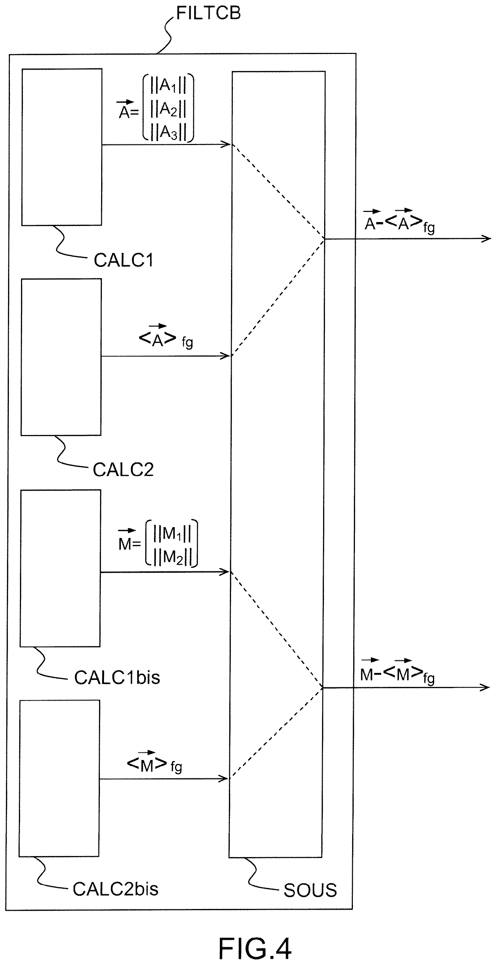

En variante, sur la figure 4, le premier module de calcul CALC1 évalue un vecteur $\vec{A}$ ayant pour composantes une norme euclidienne de la ou les mesures

$$\vec{A} = \begin{pmatrix} \|A1\| \\ \|A2\| \\ \|A3\| \end{pmatrix},$$

simultanées ici au nombre de trois, transmises par les accéléromètres axiaux ACC1, ACC2 et ACC3.

En parallèle, le deuxième module de calcul CALC2, évalue, sur une fenêtre glissante fg, une moyenne temporelle $<\vec{A}>_{fg}$, sur la fenêtre courante, du vecteur $\vec{A}$.

Le soustracteur SOUS est capable d'effectuer la différence $\vec{A}-<\vec{A}>_{fg}$ entre le vecteur $\vec{A}$, fourni par les premiers moyens de calcul CALC1, et la moyenne temporelle $<\vec{A}>_{fg}$, sur la fenêtre courante, du vecteur $\vec{A}$.

Dans le présent exemple, le dispositif DISP comprenant deux magnétomètres MAGN1 et MAGN2, le filtre coupe-bas FILTCB comprend également un premier module de calcul bis CALC1bis et un deuxième module de calcul bis CALC2bis, ce qui serait également le cas si le dispositif DISP ne comprenant qu'un seul magnétomètre. Le premier module de calcul bis CALC1bis évalue une norme $\|\vec{M}\|$ euclidienne du vecteur bis $\vec{M}$ ayant pour composantes la ou les mesures simultanées

$$\vec{M} = \begin{pmatrix} M1 \\ M2 \end{pmatrix},$$ ici au nombre de deux, transmises par les magnétomètres axiaux MAGN1 et MAGN2.

En parallèle, le deuxième module de calcul bis CALC2bis, évalue, sur un fenêtre glissante fg, une moyenne temporelle $<\vec{M}>_{fg}$, sur la fenêtre courante, du vecteur bis $\vec{M}$.

Le soustracteur SOUS est alors capable d'effectuer la différence $\vec{M}-<\vec{M}>_{fg}$ entre la norme euclidienne $\|\vec{M}\|$ du vecteur bis $\vec{M}$, fournie par les premiers moyens de calcul bis CALC1bis et la moyenne temporelle $<\vec{M}>_{fg}$, sur la fenêtre courante, du vecteur $\vec{M}$.

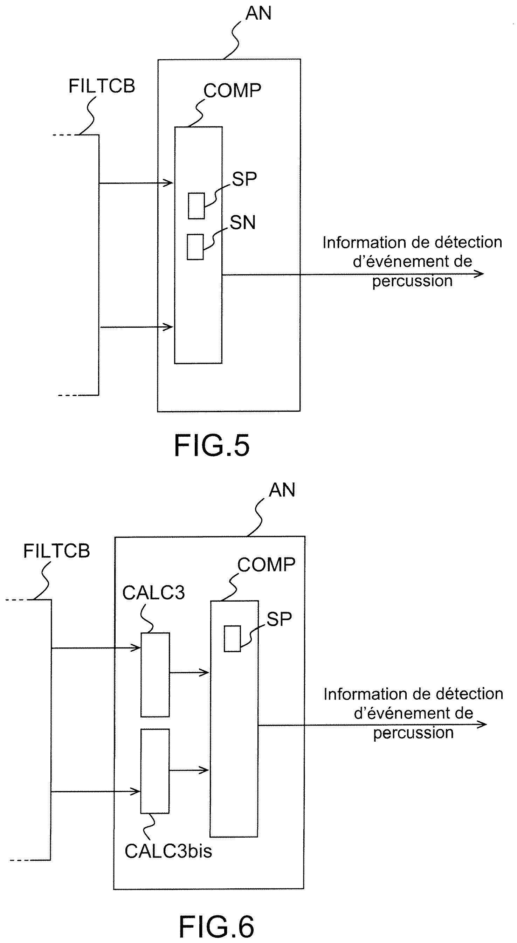

Sur la figure 5, est illustré un mode de réalisation du dispositif de détection d'événement de percussion DISP dans lequel le module d'analyse comprend un module de comparaison COMP adapté pour comparer la différence scalaire ou les composantes, dans le présent exemple au nombre de trois, de la différence vectorielle, correspondant à le ou les accéléromètres, délivrée en sortie du filtre coupe-bas FILTCB (cf figure 3 ou figure 4), avec deux seuils SP et SN de signes opposés, positif et négatif.

Dans l'exemple décrit, le dispositif DISP comprenant deux magnétomètres MAGN1 et MAGN2, le module de comparaison est également adapté pour comparer les différences scalaires ou les composantes des différences vectorielles, correspondant à le ou les capteurs axiaux additionnels, dans le présent exemple au nombre de deux, délivrées en sortie desdits moyens de filtrage coupe-bas (cf figure 3 ou figure 4), avec les deux seuils SP et SN de signes opposés, positif et négatif.

Les deux seuils SP et SN peuvent être appris automatiquement pendant des phases supervisées ou phase d'apprentissage. Par exemple, pour le pointage avec le claquement des doigts pour un dispositif comprenant un boitier muni de moyens de fixation au poignet, une phase de mouvement de pointage sans clic, i.e. sans choc est effectuée pour acquisition. On applique le même traitement et on fixe le seuil à un pourcentage du minimum ou du maximum des signaux centrés, selon la sensibilité ou robustesse que l'on désire.

Le module d'analyse AN délivre en sortie une information représentative de la détection d'un événement de percussion lorsque le module de comparaison COMP détecte un dépassement positif du seuil positif SP et un dépassement négatif du seuil négatif SN, successivement dans un ordre quelconque, sur la différence scalaire ou sur au moins une composante de la différence vectorielle correspondant à le ou les accéléromètres, ici au nombre de trois, délivrée en sortie du filtre coupe-bas FILTCB, et, en cas de présence d'au moins un capteur axial additionnel, en l'espèce deux magnétomètres MAGN1 et MAGN2, lorsque, en outre, simultanément, le module de comparaison COMP ne détecte aucun dépassement positif du seuil positif SP ou dépassement négatif du seuil négatif SN d'une composante de la différence vectorielle correspondant à le ou les capteurs axiaux additionnels, en l'espèce les deux magnétomètres MAGN1 et MAGN2, délivrée en sortie du filtre coupe-bas FILTCB.

En cas d'absence de magnétomètre ou capteur additionnel, seule la première condition est considérée.

Sur la figure 6, en variante de la figure 5, est illustré un mode de réalisation du dispositif de détection d'événement de percussion DISP dans lequel le module d'analyse AN comprend des troisièmes moyens de calcul CALC3 du carré de la différence scalaire ou des carrés des composantes, ici au nombre de trois, de la différence vectorielle, correspondant à le ou les accéléromètres, délivrée en sortie desdits moyens de filtrage coupe-bas FILTCB (cf figure 3 ou figure 4).

Dans l'exemple décrit, le dispositif DISP comprenant deux magnétomètres MAGN1 et MAGN2, le module d'analyse AN comprend, un troisième module bis CALC3 de calcul du carré de la différence scalaire ou des carrés des composantes de la différence vectorielle, correspondant à le ou les capteurs axiaux additionnels, délivrée en sortie desdits moyens de filtrage coupe-bas FILTCB.

Le module d'analyse AN délivre en sortie une information représentative de la détection d'un événement de percussion lorsque le module de comparaison COMP détecte un dépassement positif d'un seuil positif SP, sur le carré de la différence scalaire ou sur le carré d'au moins une composante de la différence vectorielle correspondant à le ou les accéléromètres, présentement au nombre de trois, délivrée en sortie du filtre coupe-bas FILTCB, et, en cas de présence d'au moins un capteur axial additionnel, en l'espèce deux magnétomètres MAGN1 et MAGN2, lorsque, en outre, simultanément, le module de comparaison ne détecte aucun dépassement positif du seuil positif du carré de la différence scalaire ou du carré d'une composante de la différence vectorielle correspondant à le ou les capteurs axiaux additionnels, en l'espèce les deux magnétomètres MAGN1 et MAGN2, délivrée en sortie du filtre coupe-bas FILTCB.

En cas d'absence de magnétomètre ou capteur additionnel, seule la première condition est considérée.

La taille de la fenêtre glissante est avantageusement comprise entre environ une milliseconde et dix millisecondes, et la norme euclidienne utilisée peut être n'importe quelle norme euclidienne, par exemple la norme 1, la norme 2, ou la norme infinie.

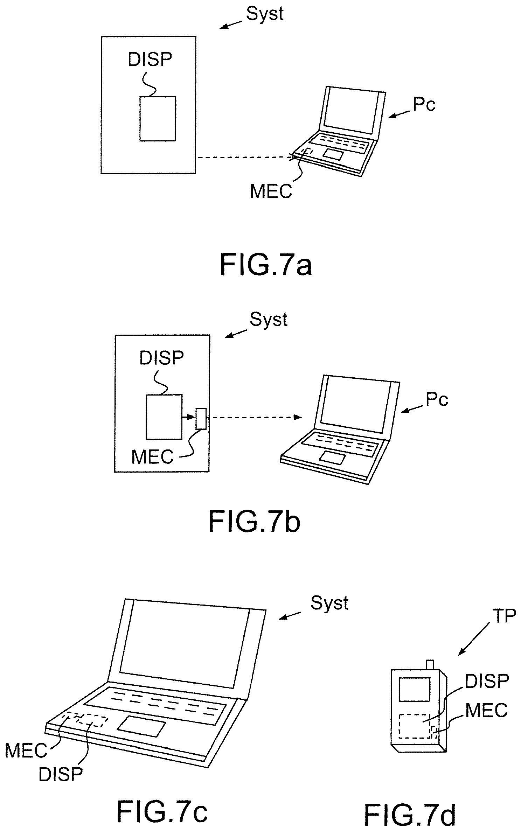

La figure 7a illustre un système mobile SYST selon un aspect de l'invention, comprenant un dispositif DISP tel que décrit précédemment, et un module externe de mise en correspondance MEC, connecté et interne à un ordinateur, capable de mettre en correspondance, sur réception d'une information de détection d'événement de percussion, de déclencher un événement associé à la réception de cette information, par exemple un clic.

La figure 7b est une variante de la figure 7a, dans laquelle le module de mise en correspondance MEC est interne au système mobile.

La figure 7c, illustre un mode de réalisation du système mobile SYST, dans lequel le système mobile SYST est un ordinateur portable muni d'un dispositif DISP et d'un module de mise en correspondance MEC intégrés, et la figure 7d illustre un autre mode de réalisation, dans lequel le système mobile SYST est un téléphone portable muni d'un dispositif DISP et d'un module de mise en correspondance MEC intégrés.

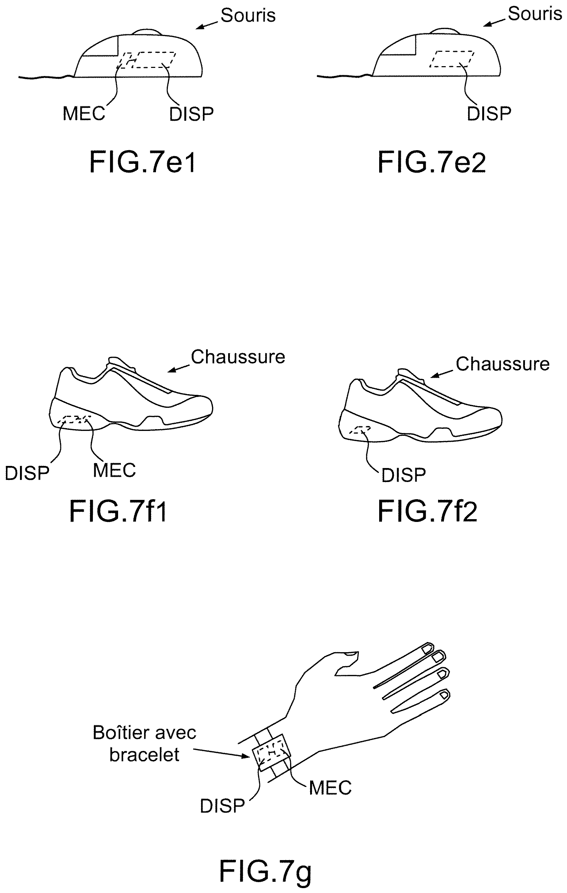

La figure 7e1 illustre un mode de réalisation du système mobile SYST, dans lequel le système mobile SYST est une souris informatique munie d'un dispositif DISP et d'un module de mise en correspondance MEC intégrés, et la figure 7e2 est une variante dans laquelle le module de mise en correspondance MEC est déporté dans l'ordinateur auquel est connectée la souris, pouvant être avec ou sans fil.

La figure 7f1 illustre un mode de réalisation du système mobile SYST, dans lequel le système mobile SYST est une chaussure munie d'un dispositif DISP et d'un module de mise en correspondance MEC intégrés, par exemple dans la semelle, et la figure 7f2 est une variante dans laquelle le module de mise en correspondance MEC est déporté dans un unité externe à laquelle est connectée la souris, préférentiellement par liaison sans fil.

La figure 7g représente schématiquement un système SYST en tant que boîtier avec bracelet, comprenant un dispositif DISP et éventuellement un module de mise en correspondance, celui-ci pouvant être déporté dans l'unité réceptrice.

Les unités réceptrices mentionnées peuvent être, par exemple, un ordinateur, un téléphone portable, un boîtier de jeux vidéo.

Bien entendu, en variante le système mobile SYST peut également, par exemple, être une télécommande, une souris 3D, un sac, ou un vêtement.

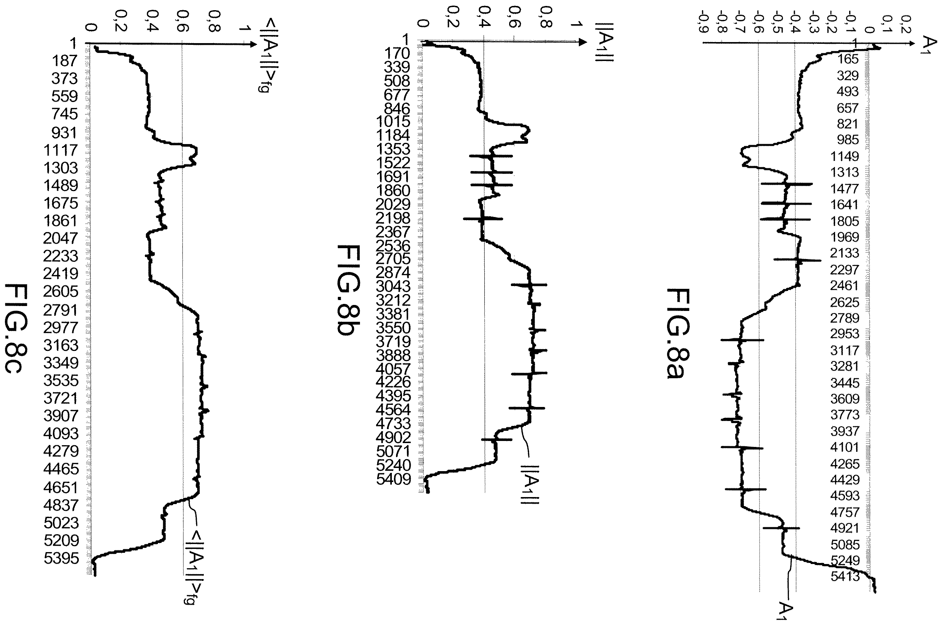

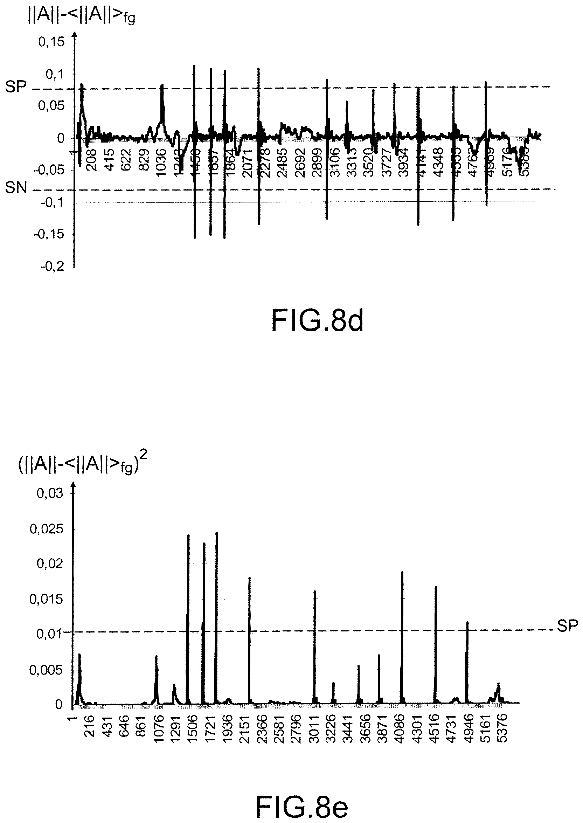

La figure 8a illustre un exemple du dispositif DISP comprenant un unique accéléromètre axial, délivrant la mesure A1, dont la norme est calculée, en figure 8b, et une moyenne de la norme est calculée, en figure 8c, sur une fenêtre glissante, sur cet exemple de 100 millisecondes. Un centrage de la norme est effectué (figure 8d), ou, en d'autres termes, la soustraction de la courbe de la norme (figure 8b) et de la moyenne (figure 8c), et comparé à deux seuils, un seuil positif et un seuil négatif pour détecter la présence d'événement de percussion.

En variante, sur la figure 8e, on calcule le carré de la norme centrée (figure 8d) et on compare le résultat avec un seuil positif pour détecter la présence d'événement de percussion.

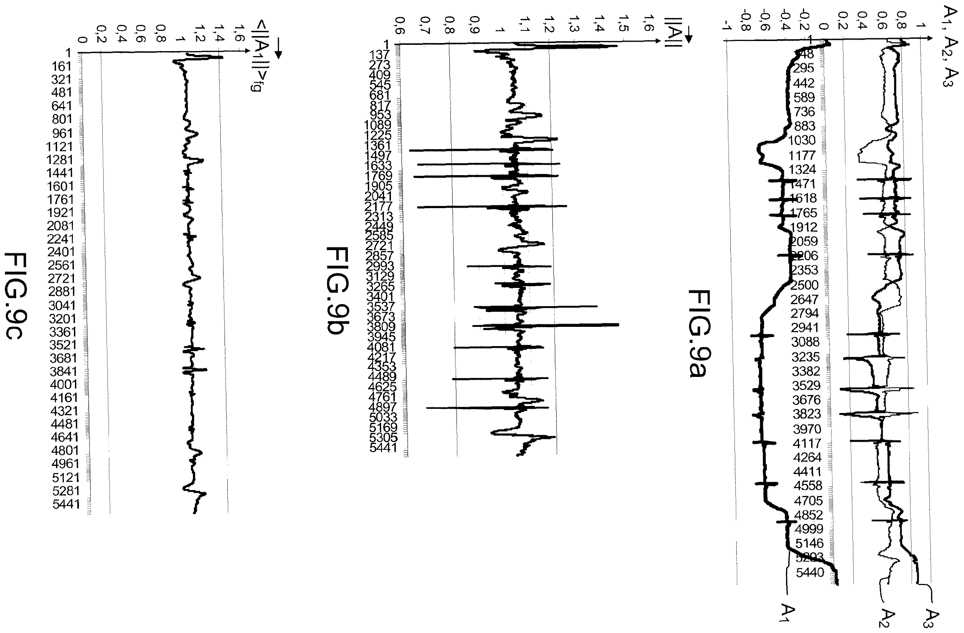

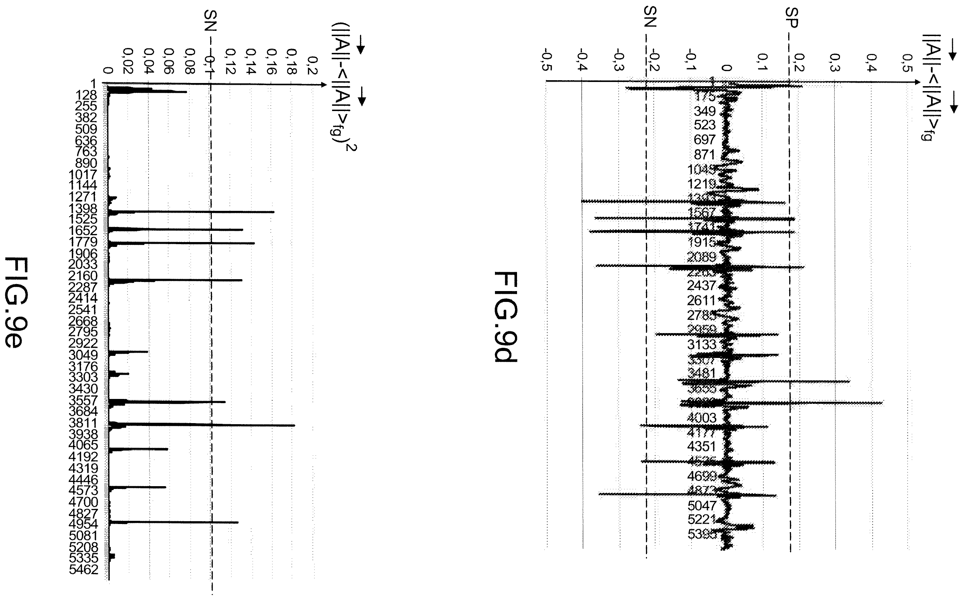

Les figures 9a, 9b, 9c, 9d et 9e représentent un cas similaire pour un dispositif DISP muni de trois accéléromètres, fournissant des mesures A1, A2 et A3.

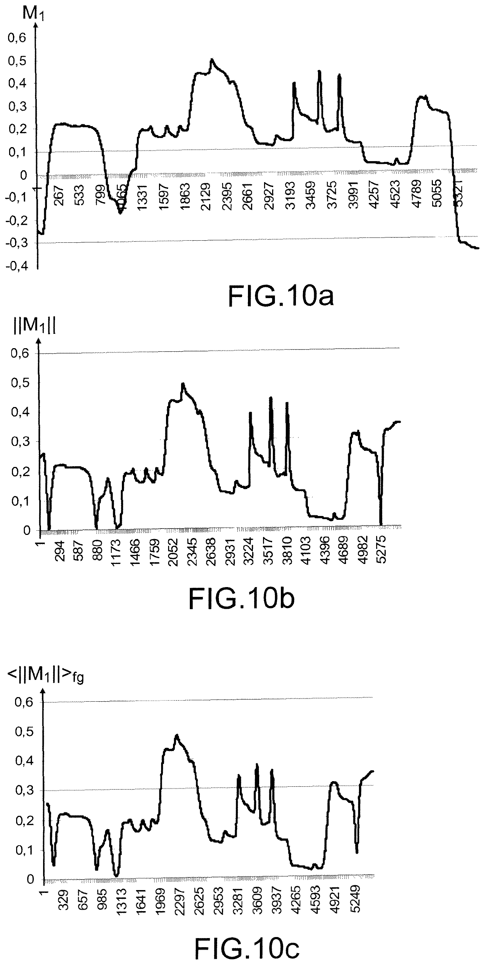

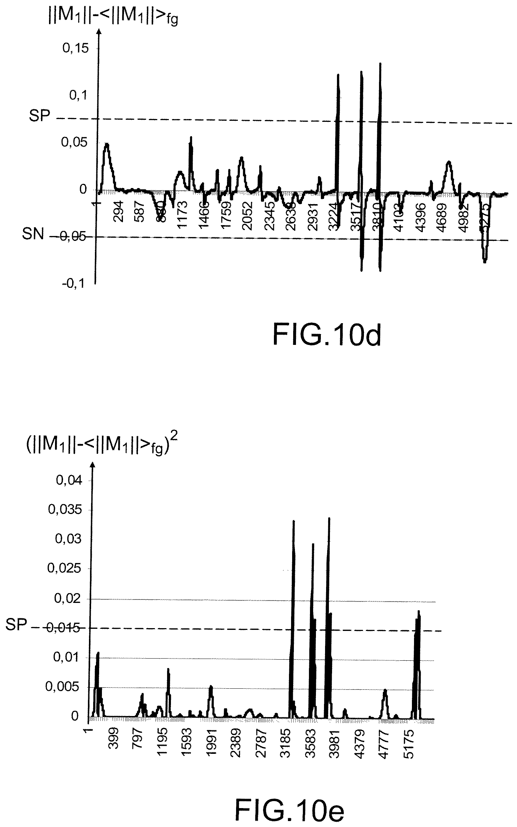

Les figures 10a, 10b, 10c, 10d et 10e illustrent l'ajout d'un magnétomètre, et le centrage de la norme similaire.

La figure 10a illustre un exemple du dispositif DISP comprenant un unique magnétomètre axial, délivrant la mesure M1, dont la norme est calculée, en figure 10b, et une moyenne de la norme est calculée, en figure 10c, sur une fenêtre glissante, sur cet exemple de 100 millisecondes. Un centrage de la norme est effectué, ou, en d'autres termes, la soustraction de la courbe de la norme (figure 10b) et de la moyenne (figure 10c), et comparé à deux seuils, un seuil positif et un seuil négatif pour détecter la présence d'événement de percussion.

En variante, sur la figure 10e, on calcule le carré de la norme centrée (fig 10d) et on compare le résultat avec un seuil positif pour détecter la présence d'événement de percussion.

La présente invention, permet, à coût réduit, d'améliorer sensiblement la détection d'événement de percussion, et d'associer à une telle détection, un autre événement tel un clic informatique.

## Revendications

**1.** Dispositif de détection d'événement de percussion (DISP) comprenant au moins un capteur accéléromètre axial (ACC1, ACC2, ACC3), comprenant en outre, au moins un capteur axial additionnel insensible aux vibrations (MAGN1, MAGN2), pour mesurer une information représentative de l'orientation du dispositif (DISP) par rapport à un champ vectoriel de direction connue dans un repère fixe non lié au dispositif (DISP), et des moyens de filtrage coupe-bas (FILTCB) munis d'au moins une entrée recevant des mesures transmises par les capteurs axiaux (ACC1, ACC2, ACC3, MAGN1, MAGN2), et des moyens d'analyse (AN) des mesures filtrées par lesdits moyens de filtrage coupe-bas (FILTCB), **caractérisé en ce que** les moyens d'analyse sont adaptés pour délivrer une information représentative de la détection d'un événement de percussion, à partir de données de comparaison fournies par des moyens de comparaison (COMP) pour comparer les mesures filtrées avec un ou deux seuils (SP, SN).

**2.** Dispositif selon la revendication 1, comprenant deux ou trois accéléromètres montés deux à deux orthogonaux.

**3.** Dispositif selon la revendication 2, comprenant deux capteurs axiaux additionnels (MAGN1, MAGN2) montés orthogonalement.

**4.** Dispositif selon l'une des revendications 1 à 3, dans lequel lesdits moyens de filtrage coupe-bas (FILTCB) comprennent :

- des premiers moyens de calcul (CALC1) d'une norme d'un vecteur ($\vec{A}$) ayant pour composantes la ou les mesures simultanées (A1, A2, A3) transmises par le ou les accéléromètres axiaux (ACC1, ACC2, ACC3) ;
- des premiers moyens bis de calcul (CALC1bis) d'une norme d'un vecteur bis ($\vec{M}$) ayant pour composantes la ou les mesures simultanées (M1, M2) transmises par le ou les capteurs axiaux additionnels (MAGN1, MAGN2) ;
- des deuxièmes moyens de calcul (CALC2) sur une fenêtre glissante (fg) d'une moyenne temporelle, sur la durée de la fenêtre courante, de la norme dudit vecteur ($\vec{A}$) ; et
- des deuxièmes moyens bis de calcul (CALC2bis) sur une fenêtre glissante (fg), d'une moyenne temporelle, sur la durée de la fenêtre courante, de la norme dudit vecteur bis ($\vec{M}$).

**5.** Dispositif selon la revendication 4, dans lequel lesdits moyens de filtrage coupe-bas (FILTCB) comprennent, en outre, un soustracteur (SOUS) adapté pour :

- soustraire la moyenne temporelle, sur la durée de la fenêtre courante, de la norme dudit vecteur ($\vec{A}$), fournie par lesdits deuxièmes moyens de calcul (CALC2), à la norme dudit vecteur ($\vec{A}$), fournie par lesdits premiers moyens de calcul (CALC1) ; et
- soustraire la moyenne temporelle, sur la durée de la fenêtre courante, de la norme dudit vecteur bis ($\vec{M}$), fournie par lesdits deuxièmes moyens bis de calcul (CALC2bis), à la norme dudit vecteur bis ($\vec{M}$), fournie par lesdits premiers moyens bis de calcul (CALC1bis).

**6.** Dispositif selon l'une des revendications 1 à 3, dans lequel lesdits moyens de filtrage coupe-bas (FILTCB) comprennent :

- des premiers moyens de calcul (CALC1) d'un vecteur ($\vec{A}$) ayant pour composantes respectives une norme de la ou des mesures simultanées (A1, A2, A3) transmises par le ou les accéléromètres axiaux (ACC1, ACC2, ACC3) ;
- des premiers moyens bis de calcul (CALC1bis) d'un vecteur bis ($\vec{M}$) ayant pour composantes respectives une norme de la ou des mesures simultanées (M1, M2) transmises par le ou les capteurs axiaux additionnels (MAGN1, MAGN2) ;
- des deuxièmes moyens de calcul (CALC2) sur une fenêtre glissante (fg) d'une moyenne temporelle, sur la durée de la fenêtre courante, dudit vecteur ($\vec{A}$) ; et
- des deuxièmes moyens bis de calcul (CALC2bis) sur une fenêtre glissante d'une moyenne temporelle, sur la durée de la fenêtre courante, dudit vecteur bis ($\vec{M}$).

**7.** Dispositif selon la revendication 6, dans lequel lesdits moyens de filtrage coupe-bas (FILTCB) comprennent, en outre, un soustracteur (SOUS) adapté pour :

- soustraire la moyenne temporelle, sur la durée de la fenêtre courante, dudit vecteur ($\vec{A}$), fournie par lesdits deuxièmes moyens de calcul (CALC2), au vecteur ($\vec{A}$) fourni par lesdits premiers moyens de calcul (CALC1) ; et
- soustraire la moyenne temporelle, sur la durée de la fenêtre courante, dudit vecteur bis ($\vec{M}$), fournie par lesdits deuxièmes moyens bis de calcul (CALC2bis), au vecteur bis ($\vec{M}$) fourni par lesdits premiers moyens bis de calcul (CALC1bis).

**8.** Dispositif selon la revendication 5 ou 7, dans lequel lesdits moyens de comparaison (COMP) sont adaptés pour :

- comparer la différence scalaire ou les composantes de la différence vectorielle, correspondant à le ou les accéléromètres (ACC1, ACC2, ACC3), délivrée en sortie desdits moyens de filtrage coupe-bas (FILTCB), avec deux seuils de signes opposés (SP, SN), positif et négatif ; et
- comparer les différences scalaires ou les composantes des différences vectorielles, correspondant à le ou les capteurs axiaux additionnels (MAGN1, MAGN2), délivrées en sortie desdits moyens de filtrage coupe-bas (FILTCB), avec deux seuils de signes opposés (SP, SN), positif et négatif.

**9.** Dispositif selon la revendication 8, dans lequel lesdits moyens d'analyse (AN) sont adaptés pour délivrer une information représentative de la détection d'un événement de percussion lorsque lesdits moyens de comparaison (COMP) détectent un dépassement positif du seuil positif (SP) et un dépassement négatif du seuil négatif (SN), successivement dans un ordre quelconque, sur la différence scalaire ou sur au moins une composante de la différence vectorielle correspondant à le ou les accéléromètres (ACC1, ACC2, ACC3), délivrée en sortie desdits moyens de filtrage coupe-bas (FILCB), et, lorsque, en outre, simultanément, lesdits moyens de comparaison (COMP) ne détectent aucun dépassement positif du seuil positif (SP) ou dépassement négatif du seuil négatif (SN) d'une composante de la différence vectorielle correspondant à le ou les capteurs axiaux additionnels (MAGN1, MAGN2), délivrée en sortie desdits moyens de filtrage coupe-bas (FILTCB).

**10.** Dispositif selon la revendication 5 ou 7, dans lequel lesdits moyens d'analyse (AN) comprennent :

- des troisièmes moyens de calcul (CALC3) du carré de la différence scalaire ou des carrés des composantes de la différence vectorielle, correspondant à le ou les accéléromètres (ACC1, ACC2, ACC3), délivrée en sortie desdits moyens de filtrage coupe-bas (FILTCB) ; et
- des troisièmes moyens bis de calcul (CALC3bis) du carré de la différence scalaire ou des carrés des composantes de la différence vectorielle, correspondant à le ou les capteurs axiaux additionnels (MAGN1, MAGN2), délivrée en sortie desdits moyens de filtrage coupe-bas (FILTCB).

**11.** Dispositif selon la revendication 10, dans lequel lesdits moyens d'analyse (AN) sont adaptés pour délivrer une information représentative de la détection d'un événement de percussion, lorsque lesdits moyens de comparaison (COMP) détectent un dépassement positif d'un seuil positif (SP), sur le carré de la différence scalaire ou sur le carré d'au moins une composante de la différence vectorielle correspondant à le ou les accéléromètres (ACC1, ACC2, ACC3), délivrée en sortie desdits moyens de filtrage coupe-bas (FILTCB), et lorsque, en outre, simultanément, lesdits moyens de comparaison (COMP) ne détectent aucun dépassement positif du seuil positif (SP) du carré de la différence scalaire ou du carré d'une composante de la différence vectorielle correspondant à le ou les capteurs axiaux additionnels (MAGN1, MAGN2), délivrée en sortie desdits moyens de filtrage coupe-bas (FILTCB).

**12.** Dispositif selon l'une des revendications 1 à 11, dans lequel la taille de la fenêtre glissante (fg) est comprise entre environ une milliseconde et trois-cents millisecondes.

13. Dispositif selon l'une des revendications 1 à 12, dans lequel lesdits capteurs axiaux additionnels (MAGN1, MAGN2) sont des magnétomètres.

14. Dispositif selon l'une des revendications 4 à 13, dans lequel la norme est euclidienne.

15. Système mobile (SYST) comprenant un dispositif de détection d'événement de percussion (DISP) selon l'une des revendications précédentes, ledit système mobile (SYST) comprenant une souris informatique, ou une télécommande, ou un périphérique de jeu vidéo, ou un téléphone mobile, ou un ordinateur portable, ou une chaussure, ou un boitier muni de moyens de fixation corporels.

16. Système mobile selon la revendication 15, dans lequel, lesdits moyens d'analyse (AN) étant adaptés pour délivrer une information représentative de la détection d'un événement de percussion, le système comprend des moyens internes ou externes (MEC) pour mettre en correspondance une réception d'une ou plusieurs informations représentatives de la détection d'un événement de percussion durant un intervalle de temps prédéterminé avec le déclenchement d'un événement, tel un clic, un double-clic ou un multi-clic informatique.

**Patentansprüche**

1. Vorrichtung zur Erkennung von Stoßereignissen (DISP), welche mindestens einen Axialbeschleunigungsmesser-Sensor (ACC1, ACC2, ACC3) beinhaltet, welche zudem mindestens einen für Schwingungen unempfindlichen zusätzlichen Axialsensor (MAGN1, MAGN2) beinhaltet, um eine Information zu messen, welche die Ausrichtung der Vorrichtung (DISP) in Bezug auf ein Vektorfeld bekannter Richtung in einem festen Koordinatensystem darstellt, welches nicht mit der Vorrichtung (DISP) verbunden ist, und Tiefensperr-Filtermittel (FILTCB), welche mit mindestens einem Eingang versehen sind, welcher von den Axialsensoren (ACC1, ACC2, ACC3, MAGN1, MAGN2) übertragene Messungen erhält, und Analysemittel (AN) für die durch die Tiefensperr-Filtermittel (FILTCB) gefilterten Messungen, **dadurch gekennzeichnet, dass** die Analysemittel geeignet sind, um eine Information abzugeben, welche die Erkennung eines Stoßereignisses anhand von Vergleichsdaten darstellt, welche durch Vergleichsmittel (COMP) bereitgestellt werden, um die gefilterten Messungen mit einem oder zwei Schwellenwert(en) (SP, SN) zu vergleichen.

2. Vorrichtung nach Anspruch 1, welche zwei oder drei rechtwinklige Beschleunigungsmesser beinhaltet, welche paarweise montiert sind.

3. Vorrichtung nach Anspruch 2, welche zwei zusätzliche Axialsensoren (MAGN1, MAGN2) beinhaltet, welche rechtwinklig montiert sind.

4. Vorrichtung nach einem der Ansprüche 1 bis 3, bei welcher die Tiefensperr-Filter (FILTCB) Folgendes beinhalten:

- erste Berechnungsmittel (CALC1) einer Norm eines Vektors

$$(\vec{A}),$$

welcher als Komponenten die gleichzeitige(n) Messung(en) (A1, A2, A3) besitzt, welche durch den oder die Axialbeschleunigungsmesser (ACC1, ACC2, ACC3) übertragen wird/werden;
- erste Mittel zur Berechnung bis (CALC1bis) einer Norm eines Vektors bis ($\vec{M}$), welcher als Komponenten die gleichzeitige(n) Messung(en) (M1, M2) besitzt, welche durch den oder die zusätzlichen Axialsensor(en) (MAGN1, MAGN2) übertragen wird/werden;
- zweite Mittel zur Berechnung (CALC2), über ein gleitendes Fenster (fg), eines Zeitmittelwertes, über die Dauer des laufenden Fensters, der Norm des Vektors ($\vec{A}$); und
- zweite Mittel bis zur Berechnung (CALC2bis), über ein gleitendes Fenster (fg), eines Zeitmittelwertes, über die Dauer des laufenden Fensters, der Norm des Vektors bis ($\vec{M}$).

5. Vorrichtung nach Anspruch 4, bei welcher die Tiefensperr-Filtermittel (FILTCB) zudem einen Subtrahierer (SOUS) beinhalten, welcher für folgende Schritte geeignet ist:

- Subtrahieren des Zeitmittelwertes, über die Dauer des laufenden Fensters, der Norm des Vektors ($\vec{A}$), welche durch die zweiten Berechnungsmittel (CALC2) bereitgestellt wird, von der Norm des Vektors ($\vec{A}$), welche durch die ersten Berechnungsmittel (CALC1) bereitgestellt wird; und
- Subtrahieren des Zeitmittelwertes, über die Dauer des laufenden Fensters, der Norm des Vektors bis ($\vec{M}$), welche durch die zweiten Berechnungsmittel bis (CALC2bis) bereitgestellt wird, von der Norm des Vektors bis ($\vec{M}$), welche durch die ersten Berechnungsmittel bis (CALC1bis) bereitgestellt wird.

**6.** Vorrichtung nach einem der Ansprüche 1 bis 3, bei welcher die Tiefensperr-Filter (FILTCB) Folgendes beinhalten:

- erste Mittel zur Berechnung (CALC1) eines Vektors

$$(\vec{A}),$$

welcher als jeweilige Komponenten eine Norm der gleichzeitige(n) Messung(en) (A1, A2, A3) besitzt, welche durch den oder die Axialbeschleunigungsmesser (ACC1, ACC2, ACC3) übertragen wird/werden;
- erste Mittel zur Berechnung bis (CALC1bis) eines Vektors bis $(\vec{M})$, welcher als jeweilige Komponenten eine Norm der gleichzeitige(n) Messung(en) (M1, M2) besitzt, welche durch den oder die zusätzlichen Axialsensor(en) (MAGN1, MAGN2) übertragen wird/werden;
- zweite Mittel zur Berechnung (CALC2), über ein gleitendes Fenster (fg), eines Zeitmittelwertes, über die Dauer des laufenden Fensters, des Vektors $(\vec{A})$; und
- zweite Mittel bis zur Berechnung (CALC2bis), über ein gleitendes Fenster, eines Zeitmittelwertes, über die Dauer des laufenden Fensters, des Vektors bis $(\vec{M})$.

**7.** Vorrichtung nach Anspruch 6, bei welcher die Tiefensperr-Filtermittel (FILTCB) zudem einen Subtrahierer (SOUS) beinhalten, welcher für folgende Schritte geeignet ist:

- Subtrahieren des Zeitmittelwertes, über die Dauer des laufenden Fensters, des Vektors $(\vec{A})$, welcher durch die zweiten Berechnungsmittel (CALC2) bereitgestellt wird, vom Vektor $(\vec{A})$, welcher durch die ersten Berechnungsmittel (CALC1) bereitgestellt wird; und
- Subtrahieren des Zeitmittelwertes, über die Dauer des laufenden Fensters, des Vektors bis $(\vec{M})$, welcher durch die zweiten Berechnungsmittel bis (CALC2bis) bereitgestellt wird, vom Vektor bis $(\vec{M})$, welcher durch die ersten Berechnungsmittel bis (CALC1bis) bereitgestellt wird.

**8.** Vorrichtung nach Anspruch 5 oder 7, bei welchem die Vergleichsmittel (COMP) für folgende Schritte geeignet sind:

- Vergleichen der skalaren Differenz oder der Komponenten der vektoriellen Differenz, welche dem oder den Beschleunigungsmesser(n) (ACC1, ACC2, ACC3) entspricht/entsprechen, welche am Ausgang der Tiefensperr-Filtermittel (FILTCB) abgegeben wird, mit zwei Schwellenwerten entgegengesetzter Vorzeichen (SP, SN), positiv und negativ; und
- Vergleichen der skalaren Differenzen oder der Komponenten der vektoriellen Differenzen, welche dem oder den zusätzlichen Axialsensor(en) (MAGN1, MAGN2) entsprechen, welche am Ausgang der Tiefensperr-Filtermittel (FILTCB) abgegeben werden, mit zwei Schwellenwerten entgegengesetzter Vorzeichen (SP, SN), positiv und negativ; und

**9.** Vorrichtung nach Anspruch 8, bei welcher die Analysemittel (AN) geeignet sind, eine Information abzugeben, welche die Erkennung eines Stoßereignisses darstellt, wenn die Vergleichsmittel (COMP) eine positive Überschreitung des positiven Schwellenwertes (SP) und eine negative Überschreitung des negativen Schwellenwertes (SN) erkennen, nacheinander, in einer beliebigen Reihenfolge, in Bezug auf die skalare Differenz oder auf mindestens eine Komponente der vektoriellen Differenz, welche dem oder den Beschleunigungsmesser(n) (ACC1, ACC2, ACC3) entspricht, welche am Ausgang der Tiefensperr-Filtermittel (FILTCB) abgegeben wird, und, wenn zudem gleichzeitig die Vergleichsmittel (COMP) keine positive Überschreitung des positiven Schwellenwertes (SP) oder keine negative Überschreitung des negativen Schwellenwertes (SN) einer Komponente der vektoriellen Differenz erkennen, welche dem oder den zusätzlichen Axialsensoren (MAGN1, MAGN2) entspricht, welche am Ausgang der Tiefensperr-Filtermittel (FILTCB) abgegeben wird.

**10.** Vorrichtung nach Anspruch 5 oder 7, bei welchem die Analysemittel (AN) Folgendes beinhalten:

- dritte Mittel zur Berechnung (CALC3) des Quadrates der skalaren Differenz oder der Quadrate der vektoriellen Differenz, welche dem oder den Beschleunigungsmesser(n) (ACC1, ACC2, ACC3) entspricht/entsprechen, welche am Ausgang der Tiefensperr-Filtermittel (FILTCB) abgegeben wird; und
- dritte Mittel bis zur Berechnung (CALC3bis) des Quadrates der skalaren Differenz oder der Quadrate der Komponenten der vektoriellen Differenz, welche dem oder den zusätzlichen Axialsensor(en) (MAGN1, MAGN2) entspricht/entsprechen, welche am Ausgang der Tiefensperr-Filtermittel (FILTCB) abgegeben wird.

**11.** Vorrichtung nach Anspruch 10, bei welcher die Analysemittel (AN) geeignet sind, eine Information abzugeben, welche die Erkennung eines Stoßereignisses darstellt, wenn die Vergleichsmittel (COMP) eine positive Überschreitung des positiven Schwellenwertes (SP) erkennen, in Bezug auf das Quadrat der skalaren Differenz oder in Bezug auf das Quadrat mindestens einer Komponente der vektoriellen Differenz, welche dem oder den Beschleunigungsmesser(n) (ACC1, ACC2, ACC3) entspricht, welche am Ausgang der Tiefensperr-Filtermittel (FILTCB) abgegeben wird, und wenn zudem gleichzeitig die Vergleichsmittel (COMP) keine positive Überschreitung des positiven Schwellenwertes (SP) des Quadrates der skalaren Differenz oder des Quadrates einer Komponente der vektoriellen Differenz erkennen, welche dem oder den zusätzlichen Axialsensoren (MAGN1, MAGN2) entspricht, welche am Ausgang der Tiefensperr-Filtermittel (FILTCB) abgegeben wird.

**12.** Vorrichtung nach einem der Ansprüche 1 bis 11, bei welcher die Größe des gleitenden Fensters (fg) zwischen ungefähr einer Millisekunde und dreihundert Millisekunden beträgt.

**13.** Vorrichtung nach einem der Ansprüche 1 bis 12, bei welcher die zusätzlichen Axialsensoren (MAGN1, MAGN2) Magnetometer sind.

**14.** Vorrichtung nach einem der Ansprüche 4 bis 13, bei welcher die Norm euklidisch ist.

**15.** Mobiles System (SYST), welches eine Vorrichtung zur Erkennung von Stoßereignissen (DISP) nach einem der vorhergehenden Ansprüche beinhaltet, wobei das mobile System (SYST) eine informatische Maus, oder eine Fernbedienung, oder ein Videospiel-Peripheriegerät, oder ein Mobiltelefon, oder einen Laptop-Computer, oder einen Schuh oder ein Gehäuse beinhaltet, welches mit körperlichen Befestigungsmitteln versehen ist.

**16.** Mobiles System nach Anspruch 15, bei welchem die Analysemittel (AN) geeignet sind, um eine Information abzugeben, welche die Erkennung eines Stoßereignisses darstellt, wobei das System interne und externe Mittel (MEC) beinhaltet, um einen Empfang einer oder mehrerer Informationen, welche die Erkennung eines Stoßereignisses während eines vorbestimmten Zeitintervalls darstellen, mit der Auslösung eines Ereignisses, wie eines Informatik-Klicks, eines Informatik-Doppelklicks oder eines Informatik-Multiklicks, abzugleichen.

**Claims**

**1.** A device for detecting percussion events (DISP), comprising at least one axial accelerometer sensor (ACC1, ACC2, ACC3), further comprising at least one additional axial sensor insensitive to vibrations (MAGN1, MAGN2), for measuring an information item representative of the orientation of the device (DISP) relative to a vector field of a known direction in a fixed coordinate system not related to the device (DISP), and low cut-off filtering means (FILTCB) provided with at least one input receiving measurements transmitted by the axial sensors (ACC1, ACC2, ACC3, MAGN1, MAGN2), and analysis means (AN) for analyzing the measurements filtered by said low cut-off filtering means (FILTCB), **characterized in that**, the analysis means are designed to deliver an information item representative of the detection of a percussion event based on comparative data from the comparison means (COMP) in order to compare the filtered measurements with one or two thresholds (SP, SN).

**2.** The device as claimed in claim 1, comprising two or three accelerometers mounted in pairs orthogonally.

**3.** The device as claimed in claim 2, comprising two additional axial sensors (MAGN1, MAGN2) mounted orthogonally.

**4.** The device as claimed in any one of claims 1 to 3, in which said low cut-off filtering means (FILTCB) comprise:

- first means of calculating (CALC1) a norm of a vector

$$(\vec{A})$$

having, for its components, the simultaneous measurement(s) (A1, A2, A3) transmitted by the axial accelerometer(s) (ACC1, ACC2, ACC3);
- first means bis for calculating (CALC1bis) a norm of a vector bis $(\vec{M})$ having, for its components, the simultaneous measurement(s) (M1, M2) transmitted by the additional axial sensor(s) (MAGN1, MAGN2);
- second means of calculating (CALC2), over a sliding window (fg), a time average, over the duration of the current window, of the norm of said vector

$$(\vec{A});$$

and
- second means bis of calculating (CALC2bis), over a sliding window (fg), a time average, over the duration of the current window, of the norm of said vector bis $(\vec{M})$.

**5.** The device as claimed in claim 4, in which said low cut-off filtering means (FILTCB) also comprise a subtractor (SOUS) designed to:

- subtract the time average, over the duration of the current window, of the norm of said vector

$$(\vec{A}),$$

supplied by said second calculation means (CALC2), from the norm of said vector $(\vec{A})$, supplied by said first calculation means (CALC1); and

- subtract the time average, over the duration of the current window, of the norm of said vector bis $(\vec{M})$, supplied by said second calculation means bis (CALC2bis), from the norm of said vector bis $(\vec{M})$, supplied by said first calculation means bis (CALC1bis).

6. The device as claimed in any one of claims 1 to 3, in which said low cut-off filtering means (FILTCB) comprise:

- first means of calculating (CALC1) a vector

$$(\vec{A})$$

having, for respective components, a norm of the simultaneous measurement(s) (A1, A2, A3) transmitted by the axial accelerometer(s) (ACC1, ACC2, ACC3);
- first means bis of calculating (CALC1bis) a vector bis $(\vec{M})$ having, for its respective components, a norm of the simultaneous measurement(s) (M1, M2) transmitted by the additional axial sensor(s) (MAGN1, MAGN2);
- second means of calculating (CALC2), over a sliding window (fg), a time average, over the duration of the current window, of said vector $(\vec{A})$; and
- second means bis of calculating (CALC2bis), over a sliding window, a time average, over the duration of the current window, of said vector bis $(\vec{M})$.

7. The device as claimed in claim 6, in which said low cut-off filtering means (FILTCB) also comprise a subtractor (SOUS) designed to:

- subtract the time average, over the duration of the current window, of said vector

$$(\vec{A}),$$

supplied by said second calculation means (CALC2) from the vector

$$(\vec{A})$$

supplied by said first calculation means (CALC1); and
- subtract the time average, over the duration of the current window, of said vector bis $(\vec{M})$, supplied by said second calculation means bis (CALC2bis), from the vector bis $(\vec{M})$ supplied by said first calculation means bis (CALC1bis).

8. The device as claimed in claim 5 or 7, in which said comparison means (COMP) are designed to:

- compare the scalar difference or the components of the vector difference, corresponding to the accelerometer(s) (ACC1, ACC2, ACC3), delivered at the output of said low cut-off filtering means (FILTCB), with two thresholds of opposite signs (SP, SN), positive and negative; and
- compare the scalar differences or the components of the vector differences, corresponding to the additional axial sensor(s) (MAGN1, MAGN2), delivered at the output of said low cut-off filtering means (FILTCB), with two thresholds of opposite signs (SP, SN), positive and negative.

9. The device as claimed in claim 8, in which said analysis means (AN) are designed to deliver an information item representative of the detection of a percussion event when said comparison means (COMP) detect a positive overshoot of the positive threshold (SP) and a negative overshoot of the negative threshold (SN), successively in any order, on the scalar difference or on at least one component of the vector difference corresponding to the accelerometer(s) (ACC1, ACC2, ACC3), delivered at the output of said low cut-off filtering means (FILTCB), and, when, furthermore, simultaneously, said comparison means (COMP) do not detect any positive overshoot of the positive threshold (SP) or negative overshoot of the negative threshold (SN) of a component of the vector difference corresponding to the additional axial sensor(s) (MAGN1, MAGN2), delivered at the output of said low cut-off filtering means (FILTCB).

10. The device as claimed in claim 5 or 7, in which said analysis means (AN) comprise:

- third means of calculating (CALC3) the square of the scalar difference or the squares of the components of the vector difference, corresponding to the accelerometer(s) (ACC1, ACC2, ACC3), delivered at the output of said low cut-off filtering means (FILTCB); and
- third means bis of calculating (CALC3bis) the square of the scalar difference or the squares of the components of the vector difference, corresponding to the additional axial sensor(s) (MAGN1, MAGN2), delivered at the output of said low cut-off filtering means (FILTCB).

11. The device as claimed in claim 10, in which said analysis means (AN) are designed to deliver an information item representative of the detection of a percussion event, when said comparison means (COMP) detect a positive overshoot of a positive threshold (SP), on the square of the scalar difference or on the square of at least one component of the vector difference corresponding to the accelerometer(s) (ACC1, ACC2, ACC3), delivered at the output of said low cut-off filtering means (FILTCB), and when, furthermore, simultaneously said comparison means (COMP) do not detect any positive overshoot of the positive threshold (SP) of the square of the scalar difference or of the square of the component of the vector difference corresponding to the additional axial sensor(s) (MAGN1, MAGN2), delivered at the output of said low cut-off filtering means (FILTCB).

12. The device as claimed in any one of claims 1 to 11, in which the size of the sliding window (fg) lies between approximately one millisecond and three hundred milliseconds.

13. The device as claimed in any one of claims 1 to 12, in which said additional axial sensors (MAGN1, MAGN2) are magnetometers.

14. The device as claimed in any one of claims 4 to 13, in which the norm is Euclidean.

15. A mobile system (SYST), comprising a percussion event detection device (DISP) as claimed in any one of the preceding claims, said mobile system (SYST) comprising a computer mouse, or a remote control, or a video game peripheral device, or a cell phone, or a laptop computer, or a shoe, or a unit provided with body fixing means.

16. A mobile system as claimed in claim 15, in which, said analysis means (AN) being designed to deliver an information item representative of the detection of a percussion event, the system comprises internal or external means (MEC) for correlating a reception of one or more information items representative of the detection of a percussion event during a predetermined time interval with the triggering of an event, such as a computer click, a double click, or a multiclick.

EP 2 271 946 B1

FIG.1

FIG.2

FIG.3

FILTCB

$$\vec{A} = \begin{pmatrix} \|A_1\| \\ \|A_2\| \\ \|A_3\| \end{pmatrix}$$

CALC1

$$\overrightarrow{<A>}_{fg}$$

CALC2

$$\vec{M} = \begin{pmatrix} \|M_1\| \\ \|M_2\| \end{pmatrix}$$

CALC1bis

$$\overrightarrow{<M>}_{fg}$$

CALC2bis

SOUS

$$\vec{A} - \overrightarrow{<A>}_{fg}$$

$$\vec{M} - \overrightarrow{<M>}_{fg}$$

FIG.4

AN

FILTCB

COMP

SP

SN

Information de détection
d'événement de
percussion

# FIG.5

AN

FILTCB

COMP

CALC3

SP

Information de détection
d'événement de
percussion

CALC3bis

# FIG.6

Syst

DISP

Pc

MEC

## FIG.7a

Syst

DISP

MEC

Pc

## FIG.7b

Syst

MEC
DISP

## FIG.7c

TP

DISP
MEC

## FIG.7d

Souris

MEC    DISP

**FIG.7e1**

Souris

DISP

**FIG.7e2**

Chaussure

DISP    MEC

**FIG.7f1**

Chaussure

DISP

**FIG.7f2**

Boîtier avec
bracelet

DISP    MEC

**FIG.7g**

FIG.8a

FIG.8b

FIG.8c

FIG.8d

FIG.8e

EP 2 271 946 B1

FIG.9a

FIG.9b

FIG.9c

22

FIG.9d

FIG.9e

FIG.10a

FIG.10b

FIG.10c

FIG.10d

FIG.10e

**EP 2 271 946 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6369794 B1
- US 20060213267 A